(19) **Europäisches Patentamt / European Patent Office / Office européen des brevets**

(11) **EP 1 904 871 B1**

(12) **FASCICULE DE BREVET EUROPEEN**

(45) Date de publication et mention
de la délivrance du brevet:
**01.02.2012  Bulletin 2012/05**

(21) Numéro de dépôt: **06778835.6**

(22) Date de dépôt: **06.07.2006**

(51) Int Cl.:
*G01S 13/93* (2006.01)       *G01S 17/93* (2006.01)

(86) Numéro de dépôt international:
**PCT/FR2006/001663**

(87) Numéro de publication internationale:
**WO 2007/010113 (25.01.2007 Gazette 2007/04)**

(54) **PROCEDE DE DETECTION PAR TELEMETRIE D'OBJETS FILAIRES SUSPENDUS**

VERFAHREN ZUR TELEMETRISCHEN DETEKTION SUSPENDIERTER DRAHTARTIGER
OBJEKTE

METHOD FOR TELEMETRIC DETECTION OF SUSPENDED WIRE-LIKE OBJECTS

(84) Etats contractants désignés:
**DE GB IT**

(30) Priorité:  **20.07.2005  FR 0507702**

(43) Date de publication de la demande:
**02.04.2008  Bulletin 2008/14**

(73) Titulaire: **EUROCOPTER**
**13725 Marignane Cédex (FR)**

(72) Inventeurs:
• **FILIAS, François-Xavier**
  **F-13410 Lambesc (FR)**
• **SEQUEIRA, Jean**
  **F-13009 Marseille (FR)**

(74) Mandataire: **GPI & Associés**
**1330, rue Guillibert de la Lauzière**
**EuroParc de Pichaury, Bât B2**
**13856 Aix en Provence Cedex 3 (FR)**

(56) Documents cités:
FR-A- 2 736 149     US-A- 3 069 654
US-A- 5 296 909     US-A1- 2002 130 792

• FAIBISH S ET AL: "New approach to laser image processing for dynamic scenes" PROCEEDINGS OF THE SPIE - THE INTERNATIONAL SOCIETY FOR OPTICAL ENGINEERING SPIE-INT. SOC. OPT. ENG USA, vol. 3065, 1997, pages 224-234, XP002379656 ISSN: 0277-786X

EP 1 904 871 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention est relative à un procédé de détection par télémétrie d'objets filaires suspendus, à bord d'un aéronef.

Le domaine technique de l'invention est celui de la fabrication d'aéronefs à voilure tournante.

Une absence ou un défaut de détection de câbles ou autres obstacles filaires suspendus est à l'origine de nombreux accidents aériens, et diminue le domaine d'utilisation des aéronefs, en particulier des giravions, lorsqu'ils effectuent des vols près du sol.

La présente invention est plus particulièrement relative à un procédé de détection par télémétrie de câbles et d'objets filiformes suspendus similaires, qui soit suffisamment fiable et rapide pour être mis en oeuvre dans un calculateur embarqué à bord d'un aéronef et pour délivrer à temps, « en temps réel », à un pilote humain ou automatique, un signal de détection utile pour permettre à l'aéronef d'éviter l'objet filiforme.

Il a déjà été proposé dans les brevets FR2736149 et US5762292 un système de reconnaissance de structures présentant des portions rectilignes dans une image délivrée par un capteur embarqué à bord d'un objet volant, par un procédé réalisant une transformation paramétrique (transformation de Hough) d'une partie de l'image.

La transformation de Hough, qui a été décrite dans le brevet US3069654, permet de détecter dans une image un ensemble de points alignés.

Il a été proposé dans le brevet US5296909 de détecter la présence de câbles à l'aide d'un télémètre laser à balayage (Lidar) délivrant des échos ou plots, chaque plot correspondant à un point d'un espace à trois dimensions caractérisé par ses trois coordonnées dans l'espace : le télémètre envoie des impulsions laser qui permettent, par mesure de leurs durées de parcours, d'obtenir des points positionnés dans l'espace (les plots 3d). Les échos sont filtrés ; un jeu de paramètres est déterminé par transformée de Hough pour tous les groupes possibles d'échos filtrés ; des agrégats de points de l'espace des paramètres sont identifiés et la position d'un câble est déterminée par transformée de Hough inverse.

Il a par ailleurs été proposé dans le brevet US6747576 de détecter la présence de lignes électriques en formant un nuage de points de mesure dans un repère terrestre à partir de données de sortie d'un capteur de télédétection et de celles d'un système de navigation, et en éliminant les points de mesure représentant le sol ; le procédé comporte ensuite une recherche de droites parmi les projections dans un plan horizontal des points de mesure, par deux transformées de Hough successives : une transformée « pure » à l'aide d'une fonction delta (de Dirac), suivie d'une transformée « floue » où la fonction delta est remplacée par une distribution gaussienne ; puis on recherche des chaînettes dans chaque plan vertical contenant une des droites ainsi trouvées, cette recherche comportant également deux transformées de Hough successives.

Pour la recherche d'une chaînette correspondant à l'équation [$z=\underline{a}*\cosh((\lambda-\underline{b})/\underline{a})+\underline{c}$] , pour chaque point de mesure de chaque plan vertical, et pour chaque valeur possible d'un paramètre $\underline{a}$ de chaînette, on calcule une transformée de Hough à deux dimensions (dans l'espace des paramètres $\underline{b}$ et $\underline{c}$) des chaînettes passant par ce point.

Ce procédé nécessite un temps de calcul très important en raison du caractère tridimensionnel de l'espace à parcourir, ainsi qu'une carte accélératrice spécifique, même lorsque l'on choisit un pas de discrétisation important et des plages de valeur réduites pour les paramètres de chaînette, au détriment de la précision des résultats.

Si certains systèmes de détection de câbles ont déjà été décrits, il n'existe à ce jour aucun système efficace dans de mauvaises conditions climatiques.

Les systèmes actuels de détection manquent également de performance par temps clair : avec un angle de visée important, un télémètre détecte seulement quelques plots 3d de la structure complète d'un câble ; en pratique, on ne peut donc pas déterminer la présence d'un câble, ni le situer dans l'espace.

Un objectif de l'invention est de proposer un procédé de détection de présence d'objets filaires suspendus par traitement de mesures télémétriques qui soit amélioré et/ou qui remédie, en partie au moins, aux lacunes et inconvénients des procédés similaires connus.

L'invention s'applique en particulier à un procédé de détection de la présence d'un objet filiforme suspendu dans le champ de vision d'un télémètre embarqué à bord d'un aéronef, dans lequel :

i) - on calcule les coordonnées terrestres de points correspondant aux échos délivrés par le télémètre, et on sélectionne des points candidats parmi ces points ;

ii) - on recherche dans un plan horizontal des segments de droite dont sont proches les projections verticales des points candidats ;

iii) - on recherche dans chaque plan vertical contenant un des segments de droite trouvés à l'étape ii), des portions de chaînette dont sont proches des points candidats.

Conformément à un aspect de l'invention, on calcule à l'étape iii), pour chaque plan vertical considéré, et pour chaque triplet de points candidats proches du plan vertical considéré, la valeur de trois paramètres a, b, et c d'une chaînette (d'équation simplifiée y=a*cosh((x/a)+b)+c) contenant les projections sur le plan vertical des trois points du triplet considéré, puis on détermine la présence d'au moins un objet filiforme suspendu en fonction de la distribution (en particulier des maxima) des valeurs des paramètres de chaînette calculés pour tous les triplets de points candidats proches du plan vertical considéré.

Malgré le fait que les calculs sont effectués pour tous les triplets de points candidats -et non pour tous les points candidats-, le nombre total d'opérations à réaliser est très inférieur à celui des opérations nécessitées par la méthode décrite dans le brevet US-6,747,576. En outre, le procédé selon l'invention permet une détermination précise des paramètres de chaînette et par conséquent une détection performante des obstacles filaires.

Pour calculer les trois paramètres a, b, et c d'une chaînette contenant les projections des trois points d'un triplet, on calcule d'abord une estimation a0 d'un premier paramètre a ; on calcule ensuite le premier paramètre a en fonction de l'estimation a0, puis on calcule un second paramètre b en fonction du premier paramètre a, et on calcule enfin le troisième paramètre c en fonction des premier paramètre a et second paramètre b ; ces calculs sont effectués à partir des deux coordonnées de la projection (dans le plan vertical considéré) de chacun des trois points candidats du triplet considéré.

De préférence encore, pour calculer une estimation a0 d'un premier paramètre a, on calcule la parabole (du plan vertical considéré) qui contient les trois projections des points du triplet considéré, ce qui revient à remplacer le cosinus hyperbolique de l'équation de la chaînette par une série de Taylor au troisième ordre.

On calcule de préférence ensuite le premier paramètre a en fonction de l'estimation a0 par une série d'itérations newtoniennes ; après convergence du calcul itératif du premier paramètre a, on calcule les deux paramètres b et c de façon analytique.

Lorsque les valeurs des trois paramètres de chaînette ont été calculés pour tous les triplets de points candidats proches du plan vertical considéré, on détermine la présence d'au moins un objet filiforme suspendu (dans ce plan) par détermination du ou des maxima d'un espace paramétrique à trois dimensions dont les paramètres sont liés auxdits trois paramètres de chaînette par des relations linéaires ; en particulier, en déterminant ces maxima dans l'espace des paramètres [(a+c),-b*a,c], il a été constaté une amélioration des résultats, par comparaison avec un espace des paramètres [a,b,c].

D'autres caractéristiques et avantages de l'invention apparaissent dans la description suivante, qui se réfère aux dessins annexés et qui illustre, sans aucun caractère limitatif, des modes préférés de réalisation de l'invention.

La figure 1 illustre schématiquement en vue de dessus un hélicoptère équipé d'un télémètre balayant un secteur de l'espace s'étendant en avant de l'hélicoptère et dans lequel s'étend un fil suspendu.

La figure 2 illustre schématiquement les principales phases d'un procédé de détection ainsi que les résultats obtenus à l'issue de ces phases.

La figure 3 est une vue en perspective schématique illustrant certains aspects du procédé de détection d'une forme en chaînette à partir d'un groupe de points de l'espace.

Sauf indication contraire, le terme « plot » peut être utilisé ci après pour désigner un « point ».

Pour détecter des câbles de manière robuste à bord d'un hélicoptère, on utilise de préférence un senseur actif à balayage, en particulier un LIDAR (Light Detection And Ranging) ou un RADAR. Ces capteurs font l'acquisition de plots « bruts » en coordonnées sphériques : site (S), gisement (G), et distance (D).

A l'aide des composantes du vecteur vitesse $\overline{V}$(Vx,Vy,Vz) et des données d'attitude de l'aéronef (roulis (φ) tangage (θ), cap(ψ)) qui sont délivrées par une centrale inertielle par exemple, un calcul des coordonnées <x,y,z> en repère cartésien terrestre (lié au sol) peut être effectué par un calculateur embarqué.

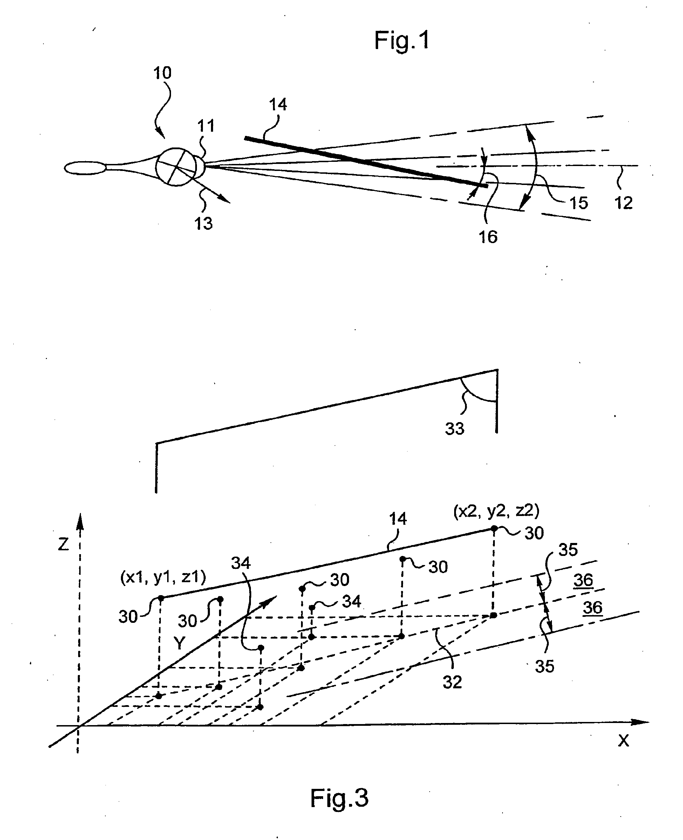

Par référence à la figure 1, un hélicoptère 10 est équipé d'un Lidar 11 balayant un secteur de l'espace s'étendant de part et d'autre d'un axe 12 de visée.

L'hélicoptère se déplace selon un vecteur 13 ; un câble 14 s'étend pour partie dans le champ 15 du télémètre 11 ; la trace du câble 14 dans un plan horizontal, en particulier dans le plan de la figure 1, forme un segment de droite faiblement incliné - selon un angle 16 de visée- par rapport à la direction 12 de visée du télémètre.

Le nombre d'échos renvoyés par une portion du câble au télémètre dépend de la distance séparant cette portion de câble du télémètre. Par ailleurs, si l'angle 16 d'observation (de visée ou incidence) est faible, la probabilité de retour d'échos renvoyés par le câble est également faible.

Ainsi, selon l'angle d'incidence du senseur et la distance séparant le câble de l'hélicoptère, on n'obtient peu ou pas d'échos ; de ce fait des câbles peuvent ne pas être détectés ni signalés aux pilotes.

La méthode de détection d'obstacles filaires décrite ci après permet de détecter tous les câbles de manière robuste, quelles que soient les conditions d'approche (incidence), de distance, et de bruit dans la scène observée par le télémètre.

Les plots bruts 3d acquis lors d'un (ou plusieurs) balayage(s) du senseur, puis redressés en repère cartésien, sont traités par un algorithme afin de détecter et de présenter à l'utilisateur des portions de câbles suspendus.

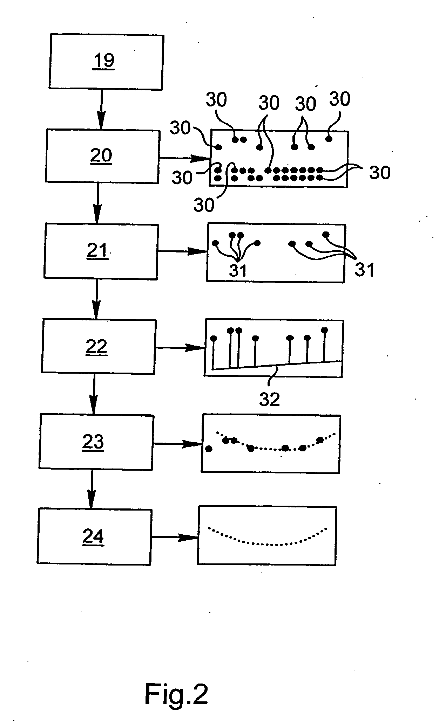

La méthode de détection comporte trois étapes principales successives illustrées figure 2 :

i) la sélection 21 des plots 3d candidats 31 à la détection de câbles (isolés ou pas), faisant suite à l'acquisition 19 des plots par le capteur à balayage et à la transformation 20 des plots en points 30 d'un espace (x,y,z) lié à la terre ;

ii) la détection 22 à partir des points candidats de « primitives » ou « traces » 32 des câbles suspendus sur le plan horizontal (plan xy figure 3) ; cette opération utilise une transformée de Hough planaire pour trouver des segments de droites susceptibles d'être des traces de câbles ;

iii) la recherche 23 de la forme exacte du (ou des) câble(s) dans l'espace pour le(s) présenter 24 à l'utilisateur ; cette opération fait également appel à une transformée de Hough pour détecter de façon robuste les câbles dans l'espace.

Il est possible de filtrer les plots candidats à la détection de câbles de nombreuses façons. Le filtrage utilise la disposition des plots 30 dans l'espace pour sélectionner ceux qui seront candidats à la détection de câbles.

Les plots 31 qui ne sont pas situés sur le sol sont sélectionnés en utilisant une méthode basée sur la cohérence surfacique ; les plots candidats sont ceux qui n'ont pas de connexion directe avec le sol.

Le filtrage peut s'effectuer soit « à la volée » en sélectionnant les plots candidats à la détection de câbles au fur et à mesure de la délivrance des plots « bruts » par le télémètre, soit en parcourant l'ensemble des plots redressés d'une « image » à trois dimensions pour distinguer les plots connectés au sol de ceux qui ne le sont pas.

La sélection des points candidats peut s'effectuer en fonction de la connexité des plots, en particulier par rapport à une 4-connexité (ou n-connexité) sur au moins trois lignes successives de balayage : on sélectionne comme plots candidats à la détection de câbles les plots isolés selon des caractéristiques de proximité.

On sélectionne comme plot candidat 31 chaque plot qui n'a pas de plots voisins ; pour chacun des plots restants, on peut comparer, par rapport à ses voisins de la figure de balayage, la distance à laquelle il se trouve afin de vérifier s'il y a ou non cohérence surfacique entre le plot restant considéré et ses voisins.

Les plots obtenus après filtrage sont plus ou moins isolés.

Afin de déterminer si les points candidats ainsi sélectionnés sont alignés en projection, on les projette (figure 3) sur le plan horizontal (x,y) et on vérifie si l'on obtient des segments de droites en utilisant une transformée de Hough linéaire en deux dimensions.

La transformée de Hough permet de reconnaître, à partir de leurs paramètres, des formes géométriques paramétriques en faisant varier les paramètres de l'équation cherchée en fonction des points rencontrés. On obtient ainsi un espace dual où les maxima d'accumulation correspondent aux paramètres recherchés pour les formes recherchées.

En adaptant cette transformée de Hough et pour borner l'espace de recherche du dual, on utilise de préférence des coordonnées cylindriques ; pour chaque point de mesure dont la projection dans le plan horizontal a pour coordonnées cartésiennes (x,y), on effectue la transformation $r = x \times \cos(\theta) + y \times \sin(\theta)$, r > 0, et $\theta$ variant entre 0 et $2\pi$.

Les zones où les accumulations sont les plus importantes correspondent aux droites de l'espace (x,y).

En évaluant les maxima de l'espace (r,$\theta$) les plus pertinents par calcul des valeurs d'accumulations de la transformée, on détecte des segments de droites sur le plan (x,y) qui correspondent à des traces de câble sur le sol.

Afin de ne pas détecter plusieurs câbles en un seul, les voisinages d'accumulation de la transformée de Hough peuvent être évolutifs en fonction de la distance : des points supplémentaires peuvent être répartis en densité autour d'un point détecté éloigné.

A partir de la (des) droite(s) 32 trouvée(s) sur la projection (x,y) par accumulation dans l'espace de Hough, on peut sélectionner des points complémentaires plus éloignés, par exemple les points de coordonnées (x1,y1) et (x2,y2) sur le plan (x,y) qui correspondront à la (aux) droite(s) détectée(s) (cf. figure 3) ; on peut faire varier à cet effet la limite 35 d'éloignement des points complémentaires 34 à sélectionner par rapport à la droite, en fonction de la distance séparant ces points de l'aéronef; ainsi, plus les plots sont éloignés de l'aéronef, plus on élargie la bande 36 de recherche des plots complémentaires projetés au sol.

Les segments de droite ainsi identifiés déterminent des plans verticaux (33 figure 3) dans lesquels peuvent se trouver un ou plusieurs câbles 14 ; ces plans sont identifiés par les équations des droites trouvées grâce à la projection des plots candidats au sol.

Pour s'affranchir des faux échos ou de la possibilité qu'il y ait plusieurs câbles dans le plan vertical, une transformée de Hough à partir de cosinus hyperboliques est utilisée.

Un câble suspendu s'étend selon une courbe s'étendant dans un plan vertical et correspondant à un cosinus hyperbolique (appelé aussi chaînette), dont l'équation simplifiée dans un plan (x,y) est de la forme

$$y = a * Cosh(\frac{x}{a} + b) + c$$ où le paramètre a est le coefficient de déformation du cosinus hyperbolique, b correspond à un décalage en x (-b*a étant le décalage réel), et c correspond à un décalage en y.

Le but de la description suivante est de trouver l' (les) équation(s) du (des) cosinus hyperbolique(s) dans les plans où les obstacles filaires peuvent se trouver.

Il faut convertir les coordonnées des plots candidats dans le repère terrestre initialement choisi pour obtenir les coordonnées de ces plots dans un repère lié au plan considéré, avant d'effectuer une transformée de Hough pour identifier les paramètres d'une ou plusieurs chaînette(s) dans ce plan, et ceci dans chacun des plans étudiés.

Pour chaque plan vertical considéré, on choisit de préférence un repère lié à ce plan qui soit tel que tous les points candidats aient des coordonnées positives dans ce repère.

A cet effet, pour une droite obtenue précédemment d'équation [$y=c^*x+d$] et pour un point de coordonnées ($x_k$, $y_k$,$z_k$) situé sur (ou proche de) cette droite :

- si c=0, alors les nouvelles coordonnées de ce point dans le repère lié au plan vertical contenant cette droite seront ($x_k$,$z_k$);

- si l'équation de cette droite est de la forme x=k / k€ $\ x = k \ / \ k \in R_*^+$, , alors les nouvelles coordonnées du point seront ($y_k$,$z_k$) ;

- si d=0, alors les nouvelles coordonnées du point seront $\left(\sqrt{x_k^2 + y_k^2}, z_k\right)$ ;

Sinon :

- si pour x=0 on a d<0 alors les nouvelles coordonnées du point seront ; $\left(\sqrt{(x_k + \frac{d}{c})^2 + y_k^2}, z_k\right)$ ;

- sinon les nouvelles coordonnées du point seront : $\left(\sqrt{x_k^2 + (y_k - d)^2}, z_k\right)$.

Des points candidats proches du plan vertical contenant la droite issue de la transformée de Hough planaire sont intégrés naturellement à l'ensemble des points candidats en utilisant la méthode ci avant, ce qui permet le cas échéant de corriger des erreurs d'acquisition en distance. En effet s'agissant d'une distance qui est calculée, les plots s'ils ne sont pas parfaitement acquis seront « recalés » dans le nouveau plan. S'ils ne sont pas valides, ils seront éliminés ultérieurement (par la transformée de Hough suivante).

Par commodité d'écriture et pour faciliter la compréhension, la description suivante utilise la même notation (x,y) pour désigner les coordonnées d'un point candidat dans un repère lié à un plan vertical contenant une des droites précédemment identifiées, où x correspond à l'axe des abscisses et où y correspond à l'axe vertical (précédemment noté z).

Pour chaque plan vertical considéré, à partir de chaque triplet de points ($x_n$,$y_n$) (n=1,2,3) du plan étudié, on détermine une chaînette contenant ces points, puis à partir de toutes les chaînettes candidates obtenues, on détermine une chaînette correspondant à un objet filaire suspendu à partir de maxima locaux d'accumulation dans l'espace de Hough (des paramètres de chaînette).

On détermine donc pour chaque triplet le coefficient (ou paramètre) 'a' du cosinus hyperbolique, la valeur 'b' (le décalage réel sur l'axe x étant égal à -b*a), et la valeur 'c du décalage sur l'axe y.

La détermination des paramètres a, b et c d'une chaînette nécessite donc, pour chaque triplet {($x_1$,$y_1$),($x_2$,$y_2$), ($x_3$,$y_3$)} de points candidats proches du plan vertical considéré - ou contenu dans ce plan-, de résoudre le système suivant :

$$\begin{cases} y_1 = a * Cosh(\frac{x_1}{a} + b) & (1) \\ y_2 = a * Cosh(\frac{x_2}{a} + b) & (2) \\ y_3 = a * Cosh(\frac{x_3}{a} + b) & (3) \end{cases}$$

Une fois ce système d'équations transcendantes résolu (comme décrit ci après) pour tous les triplets de points proches, on effectue une transformée de Hough paramétrique sur ces triplets et on détermine les maxima de l'espace de Hough qui correspondent au(x) paramètre(s) du (des) câble(s) existant(s) : a, b et c.

Afin d'améliorer la rapidité et la cohérence des opérations, il est préférable d'effectuer les accumulations selon 'a+c', '-b*a' et 'c' au lieu de 'a', 'b' et 'c', les valeurs de 'a' inférieures ou égales à zéro étant automatiquement éliminées.

La méthode selon l'invention permet d'obtenir d'excellents résultats aussi bien en temps (sur points pré filtrés et redressés) qu'en terme de précision ; cette méthode permet de s'affranchir du bruit et permet la détection de tous les câbles, même lorsque des câbles sont superposés.

L'utilisation de cette méthode permet également de détecter des câbles sous forte incidence du faisceau laser du télémètre sur le câble.

Résolution du système d'équations (1) (2) (3) :

Pour résoudre ce système, une méthode d'itérations Newtoniennes peut être envisagée sur l'ensemble du problème, mais la matrice jacobienne fonction de (a,b,c) inverse est « lourde » à manipuler.

Il est préférable d'isoler les paramètres a et b en fonction des identités hyperboliques connues :

A partir des équations (1) et (2) ci avant, on obtient par soustraction :

$$\Leftrightarrow a * \left( Cosh(\frac{x_1}{a} + b) - Cosh(\frac{x_2}{a} + b) \right) - y_1 + y_2 = 0$$

$$\Leftrightarrow a * \left( 2 * Sinh\left( \frac{\frac{x_1}{a} + b + \frac{x_2}{a} + b}{2} \right) * Sinh\left( \frac{\frac{x_1}{a} + b - \frac{x_2}{a} - b}{2} \right) \right) - y_1 + y_2 = 0$$

$$\Leftrightarrow 2 * a * Sinh\left( \frac{x_1 + x_2}{2 * a} + b \right) * Sinh\left( \frac{x_1 - x_2}{2 * a} \right) = y_1 - y_2$$

$$\Leftrightarrow Sinh\left( \frac{x_1 + x_2}{2 * a} + b \right) = \frac{y_1 - y_2}{2 * a * Sinh\left( \frac{x_1 - x_2}{2 * a} \right)}$$

$$\Leftrightarrow \frac{x_1 + x_2}{2 * a} + b = ArcSinh\left( \frac{y_1 - y_2}{2 * a * Sinh\left( \frac{x_1 - x_2}{2 * a} \right)} \right)$$

$$\Leftrightarrow b = ArcSinh\left( \frac{y_1 - y_2}{2 * a * Sinh\left( \frac{x_1 - x_2}{2 * a} \right)} \right) - \left( \frac{x_1 + x_2}{2 * a} \right) \qquad (\alpha)$$

Le même raisonnement permet d'obtenir, à partir des équations (1) et (3):

$$b = ArcSinh\left( \frac{y_1 - y_3}{2 * a * Sinh\left( \frac{x_1 - x_3}{2 * a} \right)} \right) - \left( \frac{x_1 + x_3}{2 * a} \right) \qquad (\beta)$$

A partir des équations (α) et (β), on obtient l'équation (A) suivante:

$$ArcSinh\left( \frac{y_1 - y_2}{2 * a * Sinh\left( \frac{x_1 - x_2}{2 * a} \right)} \right) - \left( \frac{x_1 + x_2}{2 * a} \right) = ArcSinh\left( \frac{y_1 - y_3}{2 * a * Sinh\left( \frac{x_1 - x_3}{2 * a} \right)} \right) - \left( \frac{x_1 + x_3}{2 * a} \right)$$

On calcule le paramètre 'a' à partir de l'équation (A) en utilisant une méthode Newtonienne itérative.
A partir de l'équation (α) ou (β), on calcule ensuite le paramètre 'b', puis on calcule le paramètre 'c'à partir d'une des équations (1), (2) ou (3).

Calcul du paramètre 'a' par itérations newtoniennes :

La formule itérative de Newton permet de calculer $a_k/(k \in$ N) par la formule :

$$a_{k+1} = a_k - \frac{F(a_k)}{F'(a_k)}$$

où $a_k$ représente la valeur approchée de 'a' à l'itération k.

A partir de (A), on a donc :

$$F(a_k) = ArcSinh\left(\frac{y_1 - y_2}{2 * a_k * Sinh\left(\frac{x_1 - x_2}{2 * a_k}\right)}\right) - ArcSinh\left(\frac{y_1 - y_3}{2 * a_k * Sinh\left(\frac{x_1 - x_3}{2 * a_k}\right)}\right) + \left(\frac{x_3 - x_2}{2 * a_k}\right)$$

En dérivant $F(a_k)$ on obtient :

$$F'(a_k) = \left(\frac{x_2 - x_3}{2 * a_k^2}\right) + \left(\frac{-\dfrac{(y_1 - y_2)}{2 * a_k^2 * Sinh\left(\frac{x_1 - x_2}{2 * a_k}\right)} + \dfrac{(x_1 - x_2) * (y_1 - y_2)}{4 * a_k^3 * Tanh\left(\frac{x_1 - x_2}{2 * a_k}\right) * Sinh\left(\frac{x_1 - x_2}{2 * a_k}\right)}}{\sqrt{1 + \dfrac{(y_1 - y_2)^2}{4 * a_k^2 * Sinh\left(\frac{x_1 - x_2}{2 * a_k}\right)^2}}}\right)$$

$$-\left(\frac{-\dfrac{(y_1 - y_3)}{2 * a_k^2 * Sinh\left(\frac{x_1 - x_3}{2 * a_k}\right)} + \dfrac{(x_1 - x_3) * (y_1 - y_3)}{4 * a_k^3 * Tanh\left(\frac{x_1 - x_3}{2 * a_k}\right) * Sinh\left(\frac{x_1 - x_3}{2 * a_k}\right)}}{\sqrt{1 + \dfrac{(y_1 - y_3)^2}{4 * a_k^2 * Sinh\left(\frac{x_1 - x_3}{2 * a_k}\right)^2}}}\right)$$

Pour déterminer une valeur initiale a0 proche de la solution, et pour assurer la convergence des itérations, on simplifie l'équation de la chaînette en fonction d'une série de Taylor au 3ème ordre du cosinus hyperbolique; l'équation de la chaînette est remplacée par l'équation :

$$y_n = a + \frac{x_n{}^2}{2*a} + \varepsilon(x^3)$$

Cette équation est équivalente à un polynôme de degré deux (correspondant à une parabole) et peut s'écrire :

$$y_n = A*x_n{}^2 + B*x_n + C \quad \text{(équation AA) avec} \quad \left( A = \frac{1}{2*a} \Leftrightarrow a = \frac{1}{2*A} \right)$$

A partir d'un triplet de points candidats $(x_n, y_n)$ avec (n=1,2 et 3) on calcule la valeur de A de l'équation AA par la formule :

$$A = \left( \frac{x_3(-y_1 + y_2) + x_2(y_1 - y_3) + x_1(-y_2 + y_3)}{(x_1 - x_2)(x_1 - x_3)(x_2 - x_3)} \right),$$

cette valeur correspondant à la solution du système :

$$\begin{cases} y_1 = A*x_1{}^2 + B*x_1 + C \\ y_2 = A*x_2{}^2 + B*x_2 + C \\ y_3 = A*x_3{}^2 + B*x_3 + C \end{cases}$$

Cela revient à calculer la valeur initiale a0 par la formule :

$$a0 = \left( \frac{(x_1 - x_2)(x_1 - x_3)(x_2 - x_3)}{2*(x_3(-y_1 + y_2) + x_2(y_1 - y_3) + x_1(-y_2 + y_3))} \right)$$

Cette valeur a0 sert à démarrer les itérations newtoniennes qui permettent de déterminer la valeur du premier paramètre 'a' de la chaînette, puis, comme décrit ci avant, les valeurs des deux autres paramètres de la chaînette dont sont proches (ou font partie) les points du triplet considéré.

**Revendications**

1. Procédé de détection de la présence d'un objet filiforme (14) suspendu dans le champ de vision d'un télémètre (11) embarqué à bord d'un aéronef (10), dans lequel :

   i) - on calcule les coordonnées terrestres (x,y,z) de points correspondant aux échos (S,G,D) délivrés par le télémètre, et on sélectionne des points candidats parmi ces points ;
   ii) - on recherche dans un plan horizontal des segments de droite dont sont proches les projections verticales des points candidats ;
   iii) - on recherche dans chaque plan vertical contenant un des segments de droite trouvés à l'étape ii), des portions de chaînette dont sont proches des points candidats ;

   **caractérisé en ce qu'**on calcule à l'étape iii), pour chaque plan vertical considéré, pour chaque triplet de points candidats proches du plan vertical considéré, la valeur de trois paramètres a, b, et c d'une chaînette (d'équation de la forme y=a*cosh((x/a)+b)+c) contenant les projections sur le plan vertical des trois points du triplet considéré, puis on détermine la présence d'au moins un objet filiforme suspendu en fonction de la distribution des valeurs des paramètres de chaînette calculés pour tous les triplets de points candidats proches du plan vertical considéré et **en ce que** pour calculer les trois paramètres a, b, et c d'une chaînette contenant les trois points d'un triplet, on calcule d'abord une estimation a0 d'un premier paramètre a ; on calcule ensuite le premier paramètre a en fonction de l'estimation a0, puis on calcule un second paramètre b en fonction du premier paramètre a, et on calcule enfin le troisième paramètre c en fonction des premier paramètre a et second paramètre b ; ces calculs étant effectués à partir des deux coordonnées $(x_n, y_n)$ dans le plan vertical considéré, de chacun des trois points candidats du triplet considéré.

2. Procédé selon la revendication 1 dans lequel, pour calculer une estimation a0 d'un premier paramètre a, on remplace le cosinus hyperbolique de l'équation de la chaînette par une série de Taylor au troisième ordre.

3. Procédé selon la revendication 1 ou 2 dans lequel on calcule une estimation a0 d'un premier paramètre a par la formule :

$$a0 = \left( \frac{(x_1 - x_2)(x_1 - x_3)(x_2 - x_3)}{2 * (x_3(-y_1 + y_2) + x_2(y_1 - y_3) + x_1(-y_2 + y_3))} \right).$$

4. Procédé selon l'une quelconque des revendications 1 à 3 dans lequel on calcule le premier paramètre a en fonction de l'estimation a0 par itérations newtoniennes.

5. Procédé selon la revendication 4 dans lequel on calcule à l'itération (k+1) une valeur approchée $a_{k+1}$ du paramètre a en fonction de la valeur approchée $a_k$ obtenue à l'itération k précédente par la formule :

$$a_{k+1} = a_k - \frac{F(a_k)}{F'(a_k)},$$

dans laquelle :

$$F(a_k) = ArcSinh\left( \frac{y_1 - y_2}{2 * a_k * Sinh\left(\frac{x_1 - x_2}{2 * a_k}\right)} \right) - ArcSinh\left( \frac{y_1 - y_3}{2 * a_k * Sinh\left(\frac{x_1 - x_3}{2 * a_k}\right)} \right) + \left( \frac{x_3 - x_2}{2 * a_k} \right)$$

et dans laquelle :

$$F'(a_k) = \left(\frac{x_2 - x_3}{2 * a_k^2}\right) + \left(\frac{-\dfrac{(y_1 - y_2)}{2 * a_k^2 * Sinh\left(\dfrac{x_1 - x_2}{2 * a_k}\right)} + \dfrac{(x_1 - x_2) * (y_1 - y_2)}{4 * a_k^3 * Tanh\left(\dfrac{x_1 - x_2}{2 * a_k}\right) * Sinh\left(\dfrac{x_1 - x_2}{2 * a_k}\right)}}{\sqrt{1 + \dfrac{(y_1 - y_2)^2}{4 * a_k^2 * Sinh\left(\dfrac{x_1 - x_2}{2 * a_k}\right)^2}}}\right)$$

$$- \left(\frac{-\dfrac{(y_1 - y_3)}{2 * a_k^2 * Sinh\left(\dfrac{x_1 - x_3}{2 * a_k}\right)} + \dfrac{(x_1 - x_3) * (y_1 - y_3)}{4 * a_k^3 * Tanh\left(\dfrac{x_1 - x_3}{2 * a_k}\right) * Sinh\left(\dfrac{x_1 - x_3}{2 * a_k}\right)}}{\sqrt{1 + \dfrac{(y_1 - y_3)^2}{4 * a_k^2 * Sinh\left(\dfrac{x_1 - x_3}{2 * a_k}\right)^2}}}\right)$$

6. Procédé selon la revendication 4 ou 5 dans lequel, après convergence du calcul itératif de a, on calcule les deux paramètres b et c de façon analytique.

7. Procédé selon l'une quelconque des revendications 1 à 6 dans lequel, lorsque les valeurs des trois paramètres de chaînette ont été calculés pour tous les triplets de points candidats proches du plan vertical considéré, on détermine la présence d'au moins un objet filiforme dans ce plan par détermination du ou des maxima d'un espace paramétrique à trois dimensions dont les paramètres sont liés auxdits trois paramètres de chaînette par des relations linéaires.

8. Procédé selon la revendication 7 dans lequel on détermine ces maxima dans l'espace des paramètres [(a+c),-b*a,c].

**Claims**

1. Method of detecting the presence of a filamentary object (14) suspended in the field of view of a telemeter (11) on board an aircraft (10), in which:

    i) - the terrestrial coordinates (x,y,z) of points corresponding to echoes (S,G,D) delivered by the telemeter are calculated, and candidate points are selected from these points;
    ii) - in a horizontal plane, straight-line segments that are close to vertical projections of the candidate points are searched for;
    iii) - in each vertical plane containing one of the straight-line segments found in step ii), portions of catenaries that are close to the candidate points are searched for;

    **characterised in that** in step iii), for each vertical plane under consideration, and for each triplet of candidate points close to the vertical plane under consideration, the values of three parameters a, b, and c of a catenary (of equation of the form y=a*cosh((x/a)+b)+c) containing the projections on the vertical plane of the three points of the triplet under consideration are calculated, and then the presence of at least one suspended filamentary object is determined as a function of the distribution of the values of the catenary parameters calculated for all of the triplets of candidate points close to the vertical plane under consideration, and **in that**, in order to calculate the three parameters a, b, and c of a catenary containing the three points of a triplet, firstly an estimate a0 of a first parameter a is calculated, next the first parameter a is calculated as a function of the estimate a0, then a second parameter b is calculated as a function of the first parameter a, and finally the third parameter c is calculated as a function of the first and second parameters a and b; these calculations being performed on the basis of the two coordinates $(x_n, y_n)$, in the vertical plane under consideration, of each of the three candidate points of the triplet under consideration.

2. Method according to Claim 1, in which, in order to calculate an estimate a0 of a first parameter a, the hyperbolic cosine of the catenary equation is replaced by a third-order Taylor series.

3. Method according to Claim 1 or 2, in which an estimate a0 of a first parameter a is calculated using the formula:

$$a0 = \left( \frac{(x_1 - x_2)(x_1 - x_3)(x_2 - x_3)}{2 * (x_3(-y_1 + y_2) + x_2(y_1 - y_3) + x_1(-y_2 + y_3))} \right).$$

4. Method according to any one of Claims 1 to 3, in which the first parameter a is calculated as a function of the estimate a0 by Newtonian iterations.

5. Method according to Claim 4, in which, at iteration (k+1), an approximate value $a_{k+1}$ of the parameter a is calculated as a function of the approximate value $a_k$ obtained at the preceding iteration k using the formula:

$$a_{k+1} = a_k - \frac{F(a_k)}{F'(a_k)},$$

in which:

$$F(a_k) = ArcSinh\left( \frac{y_1 - y_2}{2 * a_k * Sinh\left(\frac{x_1 - x_2}{2 * a_k}\right)} \right) - ArcSinh\left( \frac{y_1 - y_3}{2 * a_k * Sinh\left(\frac{x_1 - x_3}{2 * a_k}\right)} \right) + \left( \frac{x_3 - x_2}{2 * a_k} \right)$$

and in which:

$$F'(a_k) = \left( \frac{x_2 - x_3}{2 * a_k^2} \right) + \left( \frac{-\dfrac{(y_1 - y_2)}{2 * a_k^2 * Sinh\left(\frac{x_1 - x_2}{2 * a_k}\right)} + \dfrac{(x_1 - x_2) * (y_1 - y_2)}{4 * a_k^3 * Tanh\left(\frac{x_1 - x_2}{2 * a_k}\right) * Sinh\left(\frac{x_1 - x_2}{2 * a_k}\right)}}{\sqrt{1 + \dfrac{(y_1 - y_2)^2}{4 * a_k^2 * Sinh\left(\frac{x_1 - x_2}{2 * a_k}\right)^2}}} \right)$$

$$- \left( \frac{-\dfrac{(y_1 - y_3)}{2 * a_k^2 * Sinh\left(\frac{x_1 - x_3}{2 * a_k}\right)} + \dfrac{(x_1 - x_3) * (y_1 - y_3)}{4 * a_k^3 * Tanh\left(\frac{x_1 - x_3}{2 * a_k}\right) * Sinh\left(\frac{x_1 - x_3}{2 * a_k}\right)}}{\sqrt{1 + \dfrac{(y_1 - y_3)^2}{4 * a_k^2 * Sinh\left(\frac{x_1 - x_3}{2 * a_k}\right)^2}}} \right)$$

6. Method according to Claim 4 or 5, in which, after convergence of the iterative calculation of a, the two parameters b and c are calculated analytically.

7. Method according to any one of Claims 1 to 6, in which, once the values of the three catenary parameters have been calculated for all of the triplets of candidate points close to the vertical plane under consideration, the presence of at least one filamentary object in this plane is determined by determining the maximum or the maxima of a three-dimensional parameter space, the parameters of which are linked to said three catenary parameters by linear relationships.

8. Method according to Claim 7, in which these maxima are determined in the [(a+c),-b*a,c] parameter space.

**Patentansprüche**

1. Verfahren zum Erfassen der Präsenz eines drahtförmigen Objektes (14), welches im Gesichtsfeld eines an Bord eines Luftfahrzeugs (10) eingebauten Entfernungsmessers (11) aufgehängt ist, bei dem:

   i) die Erdkoordinaten (x, y, z) der Punkte berechnet werden, die den von dem Entfernungsmesser gelieferten Echos (S, G, D) entsprechen, und aus diesen Punkten Kandidatenpunkte ausgewählt werden,
   ii) in einer horizontalen Ebene Geradensegmente gesucht werden, die nahe den vertikalen Projektionen von Kandidatenpunkten liegen,
   iii) in jeder vertikalen Ebene, die eines der im Schritt ii) gefundenen Geradensegmente enthält, Teile von Kettenlinien gesucht werden, die nahe den Kandidatenpunkten liegen,

   **dadurch gekennzeichnet, dass** man im Schritt iii) für jede berücksichtigte vertikale Ebene für jedes Triplet von Kandidatenpunkten, die in der Nähe der berücksichtigten vertikalen Ebene liegen, den Wert von drei Parametern a, b und c einer Kettenlinie (mit einer Gleichung der Form: y = a*cosh((x/a)+b)+c), die die Projektionen von drei Punkten des berücksichtigten Triplets in der vertikalen Ebene enthält, berechnet, und die Präsenz mindestens eines aufgehängten drahtförmigen Objektes in Abhängigkeit von der Verteilung der Werte der Parameter der berechneten Kettenlinie für alle Triplets von Kandidatenpunkten, die nahe der berücksichtigten vertikalen Ebene liegen, bestimmt, und dadurch, dass, um die drei Parameter a, b und c einer Kettenlinie, die die drei Punkte eines Triplets enthält, zu berechnen, zuerst ein Schätzwert a0 eines ersten Parameters a berechnet wird, anschließend der erste Parameter a in Abhängigkeit von dem Schätzwert a0 berechnet wird, dann ein zweiter Parameter b in Abhängigkeit von dem ersten Parameter a berechnet wird, und schließlich der dritte Parameter c in Abhängigkeit von dem ersten Parameter a und dem zweiten Parameter b berechnet wird, wobei diese Berechnungen ausgehend von zwei Koordinaten ($x_n$, $y_n$) in der berücksichtigten vertikalen Ebene eines jeden der drei Kandidatenpunkte des berücksichtigten Triplets durchgeführt werden.

2. Verfahren nach Anspruch 1, bei dem zum Berechnen einer Abschätzung a0 eines ersten Parameters a der Kosinus Hyperbolicus der Gleichung der Kettenlinie durch eine Taylor-Reihe dritter Ordnung ersetzt wird.

3. Verfahren nach Anspruch 1 oder 2, bei dem ein Schätzwert a0 eines ersten Parameters a mit der Formel

$$a0 = \left( \frac{(x_1 - x_2)(x_1 - x_3)(x_2 - x_3)}{2*(x_3(-y_1 + y_2) + x_2(y_1 - y_3) + x_1(-y_2 + y_3))} \right)$$

berechnet wird.

4. Verfahren nach einem der Ansprüche 1 bis 3, bei dem der erste Parameter a in Abhängigkeit von dem Schätzwert a0 durch eine Newtonsche Iteration berechnet wird.

5. Verfahren nach Anspruch 4, bei dem durch Iteration (k+1) ein Näherungswert $a_{k+1}$ des Parameters a in Abhängigkeit von dem Näherungswert $a_k$, der durch eine vorhergehende Iteration k erhalten wurde, mit folgender Formel berechnet wird:

$$a_{k+1} = a_k - \frac{F(a_k)}{F'(a_k)},$$

wobei

$$F(a_k) = ArcSinh\left(\frac{y_1 - y_2}{2*a_k*Sinh\left(\frac{x_1-x_2}{2*a_k}\right)}\right) - ArcSinh\left(\frac{y_1 - y_3}{2*a_k*Sinh\left(\frac{x_1-x_3}{2*a_k}\right)}\right) + \left(\frac{x_3 - x_2}{2*a_k}\right)$$

und wobei

$$F'(a_k) = \left(\frac{x_2 - x_3}{2*a_k^2}\right) + \left(\frac{-\dfrac{(y_1 - y_2)}{2*a_k^2*Sinh\left(\frac{x_1-x_2}{2*a_k}\right)} + \dfrac{(x_1 - x_2)*(y_1 - y_2)}{4*a_k^3*Tanh\left(\frac{x_1-x_2}{2*a_k}\right)*Sinh\left(\frac{x_1-x_2}{2*a_k}\right)}}{\sqrt{1 + \dfrac{(y_1 - y_2)^2}{4*a_k^2*Sinh\left(\frac{x_1-x_2}{2*a_k}\right)^2}}}\right)$$

$$-\left(\frac{-\dfrac{(y_1 - y_3)}{2*a_k^2*Sinh\left(\frac{x_1-x_3}{2*a_k}\right)} + \dfrac{(x_1 - x_3)*(y_1 - y_3)}{4*a_k^3*Tanh\left(\frac{x_1-x_3}{2*a_k}\right)*Sinh\left(\frac{x_1-x_3}{2*a_k}\right)}}{\sqrt{1 + \dfrac{(y_1 - y_3)^2}{4*a_k^2*Sinh\left(\frac{x_1-x_3}{2*a_k}\right)^2}}}\right)$$

6. Verfahren nach einem der Ansprüche 4 oder 5, bei dem nach der Konvergenz der iterativen Berechnung des Parameters a die beiden Parameter b und c auf analoge Weise berechnet werden.

7. Verfahren nach einem der Ansprüche 1 bis 6, bei dem, wenn die Werte der drei Parameter der Kettenlinie für alle Triplets der Kandidatenpunkte nahe der berücksichtigten vertikalen Ebene berechnet worden sind, die Anwesenheit mindestens eines drahtförmigen Objektes in dieser Ebene durch Bestimmung des Maximums oder der Maxima eines dreidimensionalen Parameterraums, dessen Parameter mit den drei Parametern der Kettenlinie über lineare Relationen verbunden sind, bestimmt wird.

8. Verfahren nach Anspruch 7, bei dem diese Maxima in dem Parameterraum [(a+c),-b*a, c] bestimmt werden.

## Fig.1

## Fig.3

Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2736149
- US 5762292 A
- US 3069654 A

- US 5296909 A
- US 6747576 B